(19) Europäisches Patentamt
European Patent Office
Office européen des brevets

(11) **EP 2 674 080 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**21.07.2021  Patentblatt 2021/29**

(45) Hinweis auf die Patenterteilung:
**28.01.2015  Patentblatt 2015/05**

(21) Anmeldenummer: **13171864.5**

(22) Anmeldetag: **13.06.2013**

(51) Int Cl.:
*A47J 27/62* *(2006.01)*    *G01L 19/00* *(2006.01)*

(54) **Gargerät zum Garen einer flüssigen oder einer einen hohen Flüssigkeitsanteil enthaltenden Speise und Verfahren zum Betreiben eines solchen Gargeräts**

Cooking device for cooking a food dish that is liquid or has a high liquid component  and method for operating such a cooking device

Appareil de cuisson pour la cuisson d'un mets liquide ou contenant une grande part de liquide et procédé de fonctionnement d'un tel appareil de cuisson

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2012  DE 102012011679**

(43) Veröffentlichungstag der Anmeldung:
**18.12.2013  Patentblatt 2013/51**

(73) Patentinhaber: **MKN Maschinenfabrik Kurt Neubauer GmbH & Co. KG**
**38300 Wolfenbüttel (DE)**

(72) Erfinder:
• **Vesterling, Ulrich**
  **38126 Braunschweig (DE)**
• **Socher, Michael**
  **47249 Duisburg (DE)**
• **Engelhardt, Dirk**
  **38304 Wolfenbüttel (DE)**
• **Ruhe, Dirk**
  **38667 Bad Harzburg (DE)**

(74) Vertreter: **Strobel, Wolfgang**
  **Kroher-Strobel**
  **Rechts- und Patentanwälte PartmbB**
  **Bavariaring 20**
  **80336 München (DE)**

(56) Entgegenhaltungen:
**EP-A1- 1 500 356**        **DE-A1-102009 012 682**
**DE-A1-102010 010 498**    **DE-T2- 60 216 102**
**DE-U1- 9 203 663**        **FR-A1- 2 634 914**
**US-A1- 2006 207 986**

EP 2 674 080 B2

**Beschreibung**

Die vorliegende Erfindung betrifft ein Gargerät zum Garen einer flüssigen oder einer einen hohen Flüssigkeitsanteil enthaltenden Speise, mit einem Tiegel, einem Deckel für den Tiegel, einem Druckraum und einem Drucksensor. Weiterhin betrifft die vorliegende Erfindung ein Verfahren zum Betreiben eines derartigen Gargeräts.

Gargeräte zum Garen von flüssigen oder Flüssigkeit enthaltenden Speisen, welche den Garvorgang mit erhöhtem Druck ermöglichen, sind seit langem bekannt und werden vielfältig angewendet. Insbesondere zeichnen sie sich durch eine schonende und energiesparende Zubereitung der Speisen aus.

Derartige Druckgargeräte gibt es wie in der DE 10 2009 013 240 A1 beschreiben für Schnellkochtöpfe, aber ebenso wie in der EP 1 342 441 B1 beschrieben auch für größere Anlagen, die insbesondere für kommerzielle Zwecke eingesetzt werden. Sie sind mit einer Vielzahl von Elementen ausgestattet, welche die Funktionalität und Sicherheit, ebenso aber auch den Komfort der Benutzer und die Information für den Benutzer, insbesondere auch dem Koch, erhöhen können. Sie kommen beispielsweise in den beiden vorerwähnten Konzepten Temperatursensoren zum Einsatz.

Beiheizte Kochkessel in ähnlicher Form sind weiterhin aus der DE 43 37 126 C2 bekannt. Diese beschreibt eine besonders zweckmäßige Form, um in einem Garraum im Inneren eines Tiegels eine gewünschte Atmosphäre herbeizuführen, beispielsweise für den Garvorgang unter erhöhtem Druck eine möglichst vollständige Wasserdampfatmosphäre bzw. alternativ dazu eine Luftatmosphäre zu erzeugen. Hierzu wird dieser Garraum belüftet und entlüftet.

Beim Erhitzen von flüssigen oder Flüssigkeit enthaltenden Speisen in dicht verschließbaren Garräumen, beispielsweise in einem Druckgargerät, entsteht ein erhöhter Druck, der im Extremfall beim Überschreiten eines konstruktiv bedingten Grenzwertes für die Druckbelastung zur Explosion des Behältnisses führen kann. Daher ist es wesentlich, dass das heiße und unter erhöhtem Druck stehende Gargerät sicher und mit möglichst hoher Zuverlässigkeit bedienbar ist und gefährliche Situationen mit überhöhten Druckbelastungen möglichst vermeidet.

Gargeräten, beispielsweise in Form von mit Deckeln verschließbaren Gartiegeln, sind keine physikalischen Grenzen im Druckaufbau gesetzt. Versagen die Sicherheitseinrichtungen bei einem Gargerät, so baut sich der Druck bis zur Zerstörung des Tiegels mit seinem Druckraum auf. Ein gut gedämmter und fest verriegelter Garraum kombiniert mit einer leistungsfähigen Heizung kann im Falle einer versagenden Sicherheitseinrichtung durch beständiges intensives Nachheizen einen deutlich überhöhten Druck aufbauen. Die im Gargerät gespeicherte Energie bei einem Nennvolumen von beispielsweise 150 Litern würde sich dann schlagartig durch Bersten des Druckraumes freisetzen.

Derartige Gargeräte mit einem verschließbaren und unter Druck setzbaren Garraum sind meist Druckgargeräte. Sie besitzen häufig einen Drucksensor, um den Druck festzustellen. Dieser Drucksensor wird unter anderem auch benutzt, um sicherzustellen, dass der Druck bestimmte Schwellenwerte nicht übersteigt. Beim Erreichen oder Übersteigen entsprechender Schwellenwerte werden dann verschiedene Steuereinrichtungen oder Sicherheitseinrichtungen tätig, etwa Sicherheitsventile, die bei Erreichen des vorgegebenen Schwellenwertes des Druckes auslösen und einen Weg für ein Entweichen des Überdruckes freigeben.

Die Druckmessung erfolgt bei vielen Gargeräten in der Regel in der Druckabbauleitung. Diese Druckmessung ist verhältnismäßig anfällig gegenüber Störungen und Ausfällen des Drucksensors.

Es besteht also ein erhebliches Interesse daran, dass die eingesetzten Drucksensoren auch entsprechend zuverlässig arbeiten, um die Schutzeinrichtungen ordnungsgemäß auslösen zu lassen.

Aus der DE 92 03 663 U1 ist ein Gargerät bekannt, mit einem Druckraum, bei dem Temperatur und Druck gemessen werden und anhand einer Umrechnungsformel die Möglichkeit besteht, die gemessenen Temperaturwerte und die gemessenen Druckwerte in miteinander vergleichbare Werte umzurechnen. Dabei ist eine Dampfdruck-Kurve in Abhängigkeit der Temperatur für salzfreies Wasser abgespeichert, wobei Sicherheitsaspekte bei dem Gargerät dieses Standes der Technik keinerlei Rolle spielen.

Aus der FR 2 634 914 ist ein Gargerät in Form eines Schnellkochtopfs bekannt, mit dem auch flüssige oder einen hohen Flüssigkeitsanteil enthaltende Speisen gegart werden können. Der Schnellkochtopf weist einen Tiegel auf, der mit einem Deckel verschließbar ist, wodurch innerhalb des Tiegels ein Druckraum gebildet werden kann, wenn bei Erhitzen der im Garraum vorhandenen Flüssigkeit durch den sich bildenden Wasserdampf ein erhöhter Druck erzeugt wird. Gemäß FR 2 634 914 weist der Schnellkochtopf sowohl einen Drucksensor zum Messen des Drucks im Druckraum als auch einen Temperatursensor zum Messen der Temperatur im Druckraum auf, weist jedoch keinerlei eigene Heizeinrichtung auf.

Mittels eines Mikroprozessors kann bei dem Schnellkochtopf gemäß der FR 2 634 914 eine Vergleichsoperation für die mit Hilfe der Umrechnungsformel aus den Temperaturmesswerten des ersten Temperatursensors oder den Druckmesswerten des Drucksensors ermittelten vergleichbaren Werten auszuführen, mit der die Werte verglichen werden, und dass die Gerätesteuerung aus dem Ergebnis der Vergleichsoperation eine Plausibilitätsbetrachtung ableitet.

Mit anderen Worten, es kann überprüft werden, ob gemäß Vergleich der gemessenen Temperaturwerte mit den gemessen Druckwerten diese Werte einander entsprechen, jedoch nur für den einzigen Anwendungsfall, dass für eine erhöhte Temperatur kein höherer Druck vorhanden ist. Daraus schließt die Steuerung des Schnellkochtopfs, dass der Benutzer vergessen hat, Flüssigkeit in den Tiegel einzufüllen und gibt ein Warnsignal aus.

Damit kann jedoch noch nicht eine Beschädigung oder sogar Zerstörung des Schnellkochtopfs vermieden werden, da gemäß FR 2 634 914 die Steuereinrichtung nur in der Lage ist, ein Warnsignal auszugeben. Ignoriert der Benutzer das Warnsignal aus welchen Gründen auch immer, kann nicht vermieden werden, dass durch die weiterhin von außen zugeführte Heizenergie bei fehlender Flüssigkeit im Garraum der Schnellkochtopf beschädigt wird.

Trotz der bekannten und vielfach eingesetzten Drucksensoren in derartigen Gargeräten besteht unverändert ein Interesse daran, die Sicherheit derartiger Geräte zusätzlich zu erhöhen.

Der vorliegenden Erfindung liegt deshalb die Aufgabe zugrunde, ein gattungsgemäßes Gargerät vorzuschlagen, das den erhöhten Sicherheitsanforderungen der Benutzer derartiger Gargeräte Rechnung trägt.

Eine weitere Aufgabe besteht darin, ein Verfahren zum Betreiben eines solchen Gargerätes vorzuschlagen, das ein besonders sicheres Betreiben ermöglicht.

Diese Aufgaben werden durch die Merkmale der Patentansprüche 1 bzw. 7 gelöst.

Ausgehend vom Oberbegriff des Anspruchs 1 zeichnet sich das Gargerät erfindungsgemäß dadurch aus, dass eine Heizung vorgesehen ist, die zum Erhitzen des Garguts im Druckraum dient,

dass die Gerätesteuerung in der Lage ist, die Heizung für den Tiegel und den Druckraum anzusteuern, und

dass die Gerätesteuerung bei einer Abweichung der von der Vergleichsoperation betrachteten Werte um mehr als einen vorgegebenen ersten Toleranzbetrag einen Abbruch des laufenden Garvorgangs vornimmt.

Erfindungsgemäß ergibt sich also eine Gestaltung mit einer Gerätesteuerung die so aufgebaut ist, dass sie, bei einer Abweichung der von der Vergleichsoperation betrachteten Werte um mehr als einen vorgegebenen Toleranzbetrag, einen Abbruch des laufenden Garvorgangs vornimmt.

Mit Hilfe der Plausibilitätsbetrachtung kann festgestellt werden, ob die mittels der Sensoren erfassten Werte einer tatsächlichen physikalischen Zustandsbedingung entsprechen, wobei bei Abweichungen die Steuerung feststellen kann, dass der normale Betriebsablauf des Gargeräts gestört ist. Dies kann beispielsweise durch Versagen von einem der Sensoren bedingt sein.

Durch diese Gestaltung wird es möglich, Gargeräte mit einem verschließbaren und unter Druck setzbaren Garraum noch sicherer zu gestalten, als dies im bisherigen Stand der Technik möglich war.

Die Erfindung basiert auch auf der Nutzung eines physikalischen Zusammenhangs, der beim Betrieb derartiger Gargeräte bisher nicht näher beachtet wurde. Bei einem idealen Gas gibt es den linearen Zusammenhang

$$p \times V = M \times R \times T.$$

Innerhalb eines Druckraumes sind das Volumen V, die Molmasse M des Gases und selbstverständlich ebenso die universelle Naturkonstante R konstant, sodass sich ein linearer Zusammenhang aus dem Druck p und der absoluten Temperatur T ergibt. Diese Formel gilt nur für ein ideales Gas. Jedoch gibt es auch bei anderen Gasen, etwa bei Wasserdampf in einem Garraum, einen entsprechenden, wenn auch nicht ganz so idealen Zusammenhang. Unter der Voraussetzung eines vollständig entlüfteten Garraumes ergibt sich in der Wasserdampfatmosphäre ein direkter Zusammenhang zwischen dem gemessenen Druck p und der gemessenen Temperatur T.

Unter den gegebenen Verhältnissen sollte daher ein Drucksensor einen Druck und ein Temperatursensor im gleichen Raum eine Temperatur messen, die reproduzierbar ineinander umrechenbar sind, wenn alle anderen Daten bekannt sind, also beispielsweise das Volumen und der genaue physikalische Zusammenhang zwischen Druck und Temperatur in einem bestimmten Wertebereich, wobei die bereits erwähnte Voraussetzung eines vollständig entlüfteten Garraums bzw. Druckraums gegeben sein muss.

Die Messung des Drucks einerseits und die Messung der Temperatur andererseits erfolgt auf sehr unterschiedlicher technischer Grundlage. Eine Druckmessung ist sehr exakt und auch sehr schnell. Eine Temperaturmessung ist dagegen weniger fehleranfällig als eine Druckmessung. Temperatursensoren sind deutlich weniger ausfallgefährdet als Drucksensoren.

Sind einerseits ein Drucksensor und andererseits ein Temperatursensor installiert, die beide ihre entsprechenden Werte in dem gleichen Raum messen, so sollten sie an sich unter Berücksichtigung der vorgenannten physikalischen Wertetabelle und der übrigen bekannten Parameter Messwerte zeigen, die direkt ineinander umrechenbar sind. Aufgrund der erwähnten Abweichungen und zeitlichen Verzögerungen in den Messungen sollten jedenfalls bei einem Vergleich der umgerechneten Messwerte diese innerhalb eines Toleranzbereiches den gleichen Wert zeigen.

Diesen Effekt macht sich die Erfindung zu nutze, in dem sie mit einem Drucksensor und einem Temperatursensor wie erwähnt den Druck und die Temperatur im Garraum misst, diese Werte einer Gerätesteuerung zuführt und einen der beiden Werte anhand einer in der Gerätesteuerung hinterlegten Formel, die eine zuvor gemessene und berechnete Tabelle widerspiegelt, ineinander umrechnet bzw. Wertepaare erzeugt, die zueinander passen sollten.

In der Vergleichsschaltung wird dann ein Vergleich dieser Werte vorgenommen und überprüft, ob die Werte innerhalb eines bestimmten Toleranzbereichs tatsächlich gleich sind bzw. um nicht mehr als eine vorgegebene Toleranz voneinander abweichen. Eine Vergleichsschaltung kann hier eine Hardwareschaltung sein. Es ist aber auch möglich, die Gerätesteuerung in anderer Form so zu gestalten, dass eine derartige Vergleichsoperation möglich ist.

Stellt sich heraus, dass dies der Fall ist, so hat man einen mit doppelter Sicherheit gemessenen Wert für den Druck bzw. Überdruck und kann diesen Wert nun als doppelt bestätigt zutreffend ansehen und zur weiteren Steuerung des Garverfahrens einsetzen. Befindet sich dieser gemessene und durch den Temperatursensor bestätigte Druck innerhalb eines vorgegebenen Rahmens, sodass insbesondere keine Explosionsgefahr oder sonstige Schäden für das Gargerät zu erwarten sind, kann das Garverfahren fortgesetzt werden.

Ergibt jedoch der Vergleich in der Vergleichsoperation bzw. der Vergleichsschaltung eine Abweichung der beiden verglichenen Werte, so muss eine der drei folgenden Möglichkeiten eingetreten sein:

1. Der Drucksensor weist einen Defekt auf oder seine Druckmesswerte gelangen aus irgendeinem Grund nicht ordnungsgemäß in die Gerätesteuerung.

2. Der Temperatursensor weist einen Defekt auf oder seine Temperaturmesswerte gelangen aus irgendeinem Grund nicht zuverlässig in die Gerätesteuerung.

3. Der Garraum ist nicht ordnungsgemäß entlüftet, beispielsweise, weil eine Entlüftungseinrichtung nicht ordnungsgemäß funktioniert.

Die erfindungsgemäße Konzeption gibt zwar noch keine definitive Aussage, welcher dieser drei Fälle eingetreten ist, auf jeden Fall stellt das Gargerät aber fest, dass offensichtlich ein Problem aufgetreten ist. Aus Sicherheitsgründen wird das gerade laufende Garverfahren abgebrochen. Die Betrachtung des Verlaufs und der Vergleich mit anderen Sensoren lassen unter Umständen und in bevorzugten Ausführungsformen sogar erste Rückschlüsse zu, welcher Fehler vorliegen könnte.

Bevorzugt wird der Nutzer darüber selbstverständlich durch eine entsprechende Fehlermeldung in Kenntnis gesetzt, die auch zusätzliche Angaben enthalten kann, etwa die gerade gemessenen und für problematisch empfundenen Messwerte und/oder den Zeitpunkt, zu dem dieser Fehler jetzt erstmals aufgetreten ist.

Bevorzugt wird vor und/oder bei dem Abbruch des laufenden Garvorgangs ein Hinweis oder eine Warnung ausgegeben. Ein derartiger Hinweis kann selbstverständlich vor dem Abbruch des Garvorgangs erfolgen. Beispielsweise wenn bei einer Temperatur von 117 °C und 1,4 bar oder weniger definiert. Eine Vorwarnung würde dann beispielsweise bei 115 °C und 1,4 bar ausgegeben werden. Etwa in der Form: "Achtung der Druck wird nicht ordnungsgemäß aufgebaut!"

Möglich ist natürlich auch, die Abweichungen zu protokollieren und erst bei wiederholten leichten Abweichungen einen Hinweis auszugeben oder eine Überprüfung anzuraten.

Der oben diskutierte erste und der zweite Fehlergrund sind leicht verständlich. Beim dritten Fehlergrund ist der Effekt eingetreten, dass die hinterlegte Formel mit der physikalischen Tabelle offensichtlich nicht die tatsächlichen Verhältnisse im Garraum widerspiegelt. Ist dieser nämlich nicht ordnungsgemäß entlüftet, verhält sich das im Garraum enthaltene Gas bzw. die dortige Atmosphäre nicht so, wie dies in der Tabelle so vorgesehen ist.

Die Erfindung besteht also mithin darin, den Druckmesswert und den Temperaturmesswert gemeinsam auszuwerten. Durch die physikalische Verknüpfung der Druck- und Temperaturwerte in einer gesättigten Wasserdampfatmosphäre, wie sie in dem Garraum wünschenswerterweise herrscht, können Rückschlüsse auf sowohl die Zustände im Gargerät als auch die korrekte Funktion der Sensoren betroffen werden.

Durch das Verwenden von zwei Messungen wird also ein erheblicher Sicherheitsgewinn erzielt, bei dem noch dazu die Fehlermöglichkeit einer nicht ordnungsgemäßen Entlüftung auch ausgeschlossen werden kann.

Die Erfindung geht also über eine rein redundante doppelte Messung weit hinaus, die etwa durch zwei Druckmessungen vorgenommen werden könnte. Durch die konkrete Idee, gerade eine Druckmessung und eine Temperaturmessung durchzuführen und miteinander in Beziehung zu bringen, lassen sich Zusatzeffekte erzielen.

Hinzu kommt auch, dass die Werte der beiden Sensoren auch bereits für sich allein einen informativen Gewinn für den Nutzer bedeuten. So ist ein Temperatursensor, der die Temperatur im Garraum misst, auch für die Steuerung des Garvorganges im Übrigen einsetzbar und seine Temperaturmesswerte für den Nutzer brauchbar, wenn sie angezeigt und/oder aufgezeichnet werden.

Eine Messung der Temperatur im Garraum ist unter anderem auch zur Überwachung der sogenannten HACCP-Daten relevant. Im Stand der Technik ohne Temperatursensoren wird gelegentlich eine Umrechnung der Druckmessung verwendet, um auf eine Temperatur zu schließen. Dies ist allerdings besonders fehleranfällig, da es gerade dabei durch etwa vorhandene Restluft zu erheblichen Fehlmessungen kommen kann, die dann die Aufzeichnung der HACCP-Daten zusätzlich mit Unsicherheitsfaktoren versehen.

Durch den Effekt der Entlüftung entsteht mithin eine Art Gütefaktor für den Druckgarprozess, ohne den Nutzer des Gargerätes mit einer zusätzlichen zu verwaltenden Datenmenge zu überfluten.

Der Aufwand für die Bereitstellung des Temperatursensors ist also mehrfach nutzbar und bedeutet wenig Mehraufwand bei der Herstellung des Gesamtgerätes.

Dabei ist durch die aus dem Stand der Technik bekannte Vergleichsschaltung auch eine automatische Überprüfung über die Korrektheit dieser Temperaturmessung möglich, so dass anders als im Stand der Technik ein defekter oder fehlerhafter Temperatursensor sofort erkannt und entsprechende Maßnahmen angeregt werden können.

Entsprechend vergleicht die Gerätesteuerung die Messwerte auf Plausibilität und stellt fest, ob die Werte zueinander passen oder nicht.

Zu berücksichtigen ist, dass für den Nutzer und Anwender der Großteil der Sensordaten üblicherweise nicht interessant ist. Der Nutzer möchte in der Regel lediglich wissen, ob der von ihm geführte Garvorgang denn nun korrekt abgelaufen ist.

Hierzu kann bevorzugt vorgesehen werden, die Daten des Temperatursensors und des Drucksensors in der Vergleichsschaltung noch mit einem Gütefaktor zu bewerten, der die Übereinstimmung der beiden Werte berücksichtigt.

Es wird also nicht nur eine Übereinstimmung innerhalb eines Toleranzbereiches als hinreichend angesehen, sondern es wird der Grad der Übereinstimmung innerhalb des Toleranzbereiches mit einem Gütefaktor bewertet, beispielsweise bei einer absoluten Übereinstimmung mit einer 1 (100% Übereinstimmung) und bei einer innerhalb des Toleranzbereiches liegenden, aber vergleichsweise schlechten Übereinstimmung mit dem Wert 0 (0% Übereinstimmung).

Der Gütewert kann auch als Grenzwert angesetzt werden.

Der absolute Druck von 1,8 bar entspricht beispielsweise der Temperatur 117 °C und erhält den Gütefaktor 1. Der Gütefaktor von 0,8 könnte die Abweichung der gemessenen Temperatur von dem Erwartungswert zum Beispiel T = 115 °C bei $p_{abs}$ = 1,8 bar angeben. Dadurch kann ein Grenzwert festgelegt werden bis zu dem der Druckgarvorgang als erfolgreich und unter HACCP-Gesichtspunkten sicher einzustufen ist. Bei dem Solldruck $p_{abs}$ = 1,4 bar und T = 109 °C liegt der Grenzwert 0,8 zum Beispiel bei T = 107 °C.

Ab dem Grenzwert wird erfindungsgemäß eine Meldung "Druckgaren erfolgreich" ausgegeben. Dadurch erhält der Benutzer eine einfache und klare Rückmeldung zu dem abgelaufenen Garvorgang. Im HACCP-Protokoll werden die Details abgelegt.

In einer bevorzugten Ausführungsform ist vorgesehen, dass die Gerätsteuerung so aufgebaut ist, dass zu Beginn des Garvorganges in dem Druckraum eine Entlüftungseinrichtung betrieben wird, bis die Abweichung der von der Vergleichsschaltung verglichenen Werte innerhalb eines vorgegebenen Toleranzbereichs liegt.

Es wird für einen Druckgarprozess gewünscht, das Gargerät vollständig zu entlüften, eben um eine mit Wasserdampf gesättigte Atmosphäre zu erhalten. Für einen ordnungsgemäßen Druckgarvorgang ist eine entsprechende Entlüftung durch eine Entlüftungseinrichtung in vielen Fällen eine Grundvoraussetzung. Die Erfindung kann nun auch für eine gezielte Entlüftung herangezogen werden.

So ist zu berücksichtigen, dass ein Druckgarprozess meist unter Normaldruck mit Luft oberhalb des Gargutspiegels beginnt. Wird das Gargut nun aufgeheizt, so wird das im Garraum bzw. im Gargut enthaltene Wasser verdampft. Der entstehende Wasserdampf verdrängt nun die ursprünglich vorhandene Luft. Um dabei eine hundertprozentige Wasserdampfatmosphäre zu erreichen, gibt es verschiedene Möglichkeiten. Besonders bevorzugt wird ein Ventil geöffnet gehalten, aus dem die ursprünglich vorhandene Luft entweichen kann. Dieses Ventil sollte "irgendwann" geschlossen werden, um den weiteren Aufbau des Druckes zu erleichtern bzw. überhaupt erst zu ermöglichen.

Dabei gibt es zwei einander entgegengesetzte Zielvorstellungen: Zum einen sollte das Ventil so schnell wie möglich geschlossen werden, um den Druck möglichst rasch aufbauen zu können. Zum anderen sollte das Ventil so lange wie möglich geöffnet bleiben, um möglichst sicher zu ein, dass die ursprünglich vorhandene Luft aus dem Garraum vollständig entwichen ist. Dadurch wird der Druckaufbau natürlich verzögert, das Garverfahren verlangsamt und es entweicht auch mehr Wasserdampf als gewünscht aus dem Garraum durch das Ventil, bis es geschlossen wird. Durch die Erfindung ergibt sich der Vorteil, dass es wesentlich präziser möglich ist, diesen Schließzeitpunkt der Entlüftung der Entlüftungseinrichtung exakt anzusteuern.

Diese erfindungsgemäße Konzeption kann beispielsweise mit der bereits eingangs erwähnten konstruktiven Einrichtung zur Belüftung und Entlüftung aus der DE 43 37 126 C2 kombiniert werden und deren Funktionsweise mitsteuern.

Wie schon erwähnt, stellt die Vergleichsschaltung fest, ob die Druckmesswerte und Temperaturmesswerte in dem Garraum unter Berücksichtigung der hinterlegten physikalischen Werte für Druck und Temperatur zueinander passen. Das bedeutet, dass bis zum Zeitpunkt des Erreichens einer Wasserdampfatmosphäre diese Werte gerade nicht zueinander passen und mithin anzeigen, dass der Garraum noch nicht vollständig entlüftet ist.

Dieser Effekt kann zu Beginn des Garverfahrens dazu benutzt werden, das Entlüftungsventil der Entlüftungseinrichtung so lange geöffnet zu halten, bis die Messwerte von Temperatursensor und Drucksensor innerhalb eines Toleranzbereiches liegen, mithin das Vorhandensein einer Atmosphäre aus Wasserdampf besonders hoher Konzentration anzeigen und damit das Schließen des Ventils sinnvoll erscheinen lassen. Zweckmäßig wird das Ventil dann durch die Gerätesteuerung automatisch geschlossen, da durch diese geschickte Messung das Vorhandensein der entsprechenden Atmosphäre bestätigt ist.

Dieses automatische Schließen des Ventils erfolgt vorteilhafterweise sehr zuverlässig. Bereits ein geringer Anteil an Restluft in der Dampfatmosphäre im Garraum senkt nämlich die Siedetemperatur von Wasser stark ab. Das bedeutet, dass die in der Gerätesteuerung hinterlegte Tabelle recht präzise erkennen lässt, ob nun die ermittelten Messwerte zueinander passen oder nicht.

Der erste Toleranzbetrag, welcher für die Funktion des Abschaltens eingesetzt wird, ist nicht der gleiche wie der zweite Toleranzbetrag, der eingesetzt wird, um das Vorhandensein einer Wasserdampfatmosphäre als erreicht festzustellen. Beide Beträge können unabhängig voneinander gerätetypisch festgelegt werden.

In weiteren bevorzugten Ausführungsformen wird berücksichtigt, dass die Temperaturmessung eine gerätetypische Trägheit aufweist. Wie erwähnt, werden die Änderungen der Temperatur durch den Temperatursensor gegenüber der Druckmessung durch den Drucksensor etwas langsamer erkannt. Vor allem beim Abkühlen folgt der Temperatursensor einer Änderung langsamer.

Diese Werte sind jedoch gerätetypisch und können ebenfalls berücksichtigt werden, etwa durch eine nichtkonstante Auslegung des vorgegebenen Toleranzbereiches abhängig von den Temperaturänderungen in den vorhergehenden Messungen oder anderer Form.

Weitere Einzelheiten, Merkmale und Vorteile der vorliegenden Erfindung ergeben sich aus der nachfolgenden Beschreibung eines Ausführungsbeispiels der Erfindung unter Bezugnahme auf die Zeichnung. Es zeigen:

Fig. 1 eine schematische Darstellung einer Ausführungsform eines erfindungsgemäßen Gargerätes; und

Fig. 2 eine Beispieltabelle für den Zusammenhang von Druck und Temperatur.

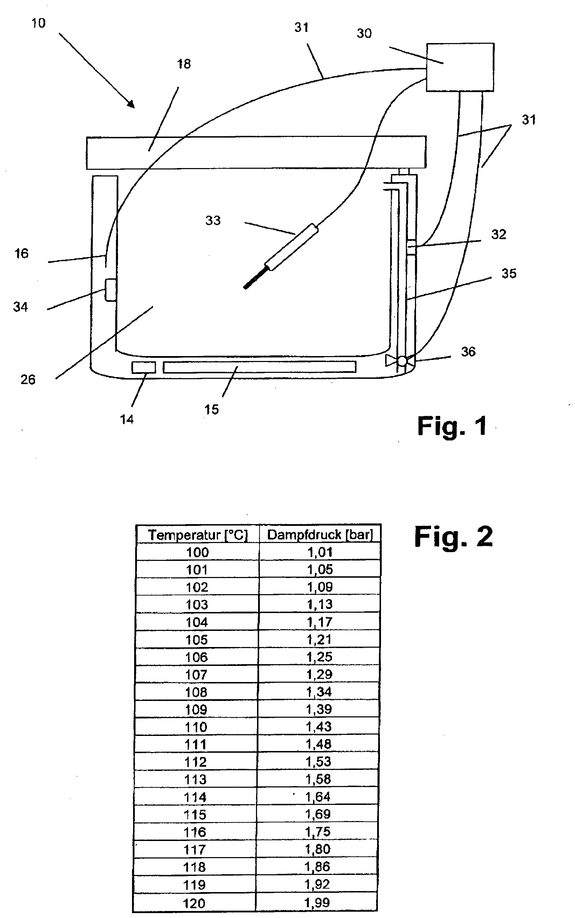

Das in der schematischen Darstellung der Fig. 1 gezeigte Gargerät 10 weist einen Tiegel 16 mit einem Druckraum 26 und einen Deckel 18 für den Tiegel 16 auf. Der Druckraum 26 ist auch der Garraum, in welchem sich (nicht dargestellt) während des Garvorgangs das Gargut befindet.

Um das Gargut im Druckraum 26 zu erhitzen, ist eine Heizung 15 vorgesehen. Zur Überwachung der Heiztemperatur ist ein Temperatursensor 14 (im Folgenden zweiter Temperatursensor) in oder benachbart zur Heizung 15 angeordnet.

Das Gargerät 10 besitzt ferner eine Gerätesteuerung 30. Diese Gerätesteuerung 30 besitzt unter anderem (nicht dargestellt) die Fähigkeit, die Heizung 15 für den Tiegel 16 und den Druckraum 26 anzusteuern, also einzuschalten, abzuschalten und die Funktionsweise zu steuern oder zu regeln.

Die Gerätesteuerung 30 ist in der dargestellten Ausführungsform darüber hinaus über Kommunikationsverbindungen 31 mit einem Drucksensor 32, einem Kerntemperaturfühler 33 zur Messung der Kerntemperatur des Garguts im Druckraum 26 und einem ersten Temperatursensor 34 verbunden.

Der erste Temperatursensor 34 befindet sich an einer Seitenwand des Tiegels 16, der Drucksensor 32 befindet sich benachbart zu einer Entlüftungsleitung 35, mit der Atmosphäre aus dem Druckraum 26 in die Umgebung abgelassen wird.

Hierzu ist eine Entlüftungseinrichtung 36 vorgesehen, die ein Entlüftungsventil aufweist. Die Gerätesteuerung 30 ist auch mit der Entlüftungseinrichtung 36 in Kommunikationsverbindung. Die Entlüftungseinrichtung 36 dient zugleich als eine Druckabbaueinrichtung und die Entlüftungsleitung 35 dient zugleich als eine Druckabbauleitung.

Das Gargerät 10 beziehungsweise der in diesem vorhandene Garraum oder Druckraum 26 mit dem darin befindlichen Gargut wird nur durch die Heizung 15 im Boden des Tiegels 16 für den Garvorgang erwärmt. Das im Gargut oder zusätzlich im Druckraum 26 befindliche Wasser wandelt sich in Wasserdampf um.

In der Gerätesteuerung 30 befindet sich eine Tabelle, die in Fig. 2 beispielhaft dargestellt ist. Die Tabelle berücksichtigt gerätespezifische Werte und geht von einer Atmosphäre von Wasserdampf aus. Werte wie in der Wertetabelle in Fig. 2 angegeben, lassen sich durch Messungen in der Praxis verifizieren und anpassen. Sie stehen aber auch in der Fachliteratur zur Verfügung, die sich mit den physikalischen Eigenschaften etwa von Wasserdampf beschäftigen. Der Einfachheit halber kann auf die "Tabellensammlung Chemie/Stoffdaten Wasser" in wikibooks und auf die in der dort aufgeführten Literatursammlung genannten Werke verwiesen werden, zu finden unter:
*de.wikibooks.org./wiki/Tabellensammlung_Chemie/_Stoffdaten_Wasser.*

Zu Beginn des Garvorganges befindet sich in dem Druckraum 26 allerdings noch kein Wasserdampf, sondern Luft. Das bedeutet, dass die vom Drucksensor 32 und Temperatursensor 34 gemessenen Werte für Druck und Temperatur innerhalb dieser Tabelle noch nicht zueinander passen, weil die Atmosphäre noch kein Wasserdampf ist.

Während dieses Aufheizzeitraums bleibt also das Ventil in der Entlüftungseinrichtung 36 geöffnet, sodass während dieses Aufheizvorganges die zunehmend heißer werdende Luft über Entlüftungsleitung 35 aus dem Druckraum 26 entweichen kann.

Die verdrängte Luft wird zunehmend durch sich bildenden Wasserdampf ersetzt.

Sobald die Atmosphäre nahezu vollständig aus Wasserdampf besteht, liegen die Werte von Temperatursensor 34 und Drucksensor 32 unter Berücksichtigung einer Toleranzbreite nach Umrechnung der Werte über die Tabelle aus Fig. 2 so, dass die Werte als passend eingestuft werden. In dem Moment, wo dieser Zustand erreicht wird, erkennt die Gerätesteuerung 30, dass eine Wasserdampfatmosphäre im Druckraum 26 vorliegt und schließt mithin die Entlüftungseinrichtung 36.

Bei einer weiten Erwärmung durch die Heizung 15 erhöht sich der Druck entsprechend.

Da die Atmosphäre in dem Druckraum 26 unverändert eine Wasserdampfatmosphäre ist, wird angenommen, dass die Werte von Drucksensor 32 und Temperatursensor 34 auch weiterhin zueinander passen.

Erst dann, wenn der Druckwert vom Drucksensor 32 (bestätigt vom dazu passenden umgerechneten Wert vom Temperatursensor 34) einen bestimmten Schwellenwert übersteigt, wird die weitere Zufuhr von Wärme von der Heizung 15 abgebrochen, da der Druck nun den maximal gewünschten Wert erreicht hat.

Sollten die Werte des Drucksensors 32 und des ersten Temperatursensors 34 nach ihrer Umrechnung den Toleranzbereich in der Vergleichsschaltung der Gerätsteuerung 30 verlassen, so erkennt die Gerätesteuerung 30, dass ein Fehler vorliegt, gibt einen Hinweis aus und beendet den Garvorgang.

Es ist möglich, anstelle des ersten Temperatursensors 34 den Temperatursensor im Kerntemperaturfühler 33 zu nutzen, da auch dieser eine Temperatur im Garraum bzw. Druckraum 26 angibt.

In einer bevorzugten Ausführungsform wird der Temperatursensor im Kerntemperaturfühler 33 zusätzlich zum ersten Temperatursensor 34 genutzt und die jeweils abgegebenen Temperaturwerte werden, wie oben erwähnt, beide separat oder kombiniert in Druckwerte ungerechnet und entsprechend bewertet.

Wenn durch dauerhaftes Nichterreichen von zueinander passenden Werten von Temperatursensor 34 und Drucksensor 32 erkennbar wird, dass einer dieser Sensoren defekt sein muss und nicht erkennt, dass bereits eine Wasserdampfatmosphäre im Druckraum 26 existiert, wird der Garvorgang unterbrochen und die Fehlfunktion entsprechend angezeigt.

In einer weiteren Ausführungsform der Erfindung werden auch die Werte des zweiten Temperatursensors 14 eingesetzt, um die Sicherheit zu erhöhen und den Komfort für den Nutzer zu verbessern.

Beispielhaft wird nun die Möglichkeit betrachtet, dass mitten in einem laufenden Druckgarprozess der Drucksensor 32 ausfällt. Dies würde wie oben beschrieben durch die Gerätesteuerung 30 festgestellt.

Sie würde in dieser Ausführungsform allerdings den Druckgarvorgang nicht abbrechen, sondern die weiterhin zur Verfügung stehenden Werte des ersten Temperatursensors 34 nutzen, die wie erörtert, auch einen Druckwert angeben. Dabei würde sie zusätzlich den zweiten Temperatursensor 14 im Boden des Tiegels 16 im Bereich der Heizung 15 nutzen. Dieser zweite Temperatursensor 14 ist zwar nicht geeignet, den Garprozess weiterzuführen, er ist jedoch in der Lage, über das größenordnungsmäßig bekannte Temperaturgefälle einen Anhaltspunkt für die Temperatur im Garraum 2 anzugeben.

Die Werte des zweiten Temperatursensors 14 im Bereich der Heizung 15 sind also in der Lage, ein recht entscheidendes Indiz für die Frage zu bilden, ob die Werte des ersten Temperatursensors 34 in der Seitenwand des Tiegels 16 nun zutreffend sind oder nicht.

Ein weiteres Beispiel ist ein Vorgang, bei dem der Drucksensor 32 zu einem Zeitpunkt $t_0$ einen Druck von 1,8 bar anzeigt und dann zu einem später liegenden Zeitpunkt $t_1$ auf einen Druck von 1,2 bar abfällt. Der erste Temperatursensor 34 des Garraumes 26 misst dagegen in beiden Fällen jeweils 117°C und der zweite Temperatursensor 14 im Boden des Tiegels 16 misst in beiden Fällen konstant eine Temperatur von 137°C im Boden des Tiegels 16.

Der letztgenannte Wert entspricht einem Temperaturgefälle von etwa 20°C vom Tiegelboden bis in den Bereich der Seitenwand des Tiegels. Ein solches Temperaturgefälle ist möglich und kann deshalb von der Gerätesteuerung 30 auch als plausibel aus gespeicherten Werten entnommen werden.

Da die beiden Temperaturwerte beide konstant sind, erkennt die Gerätesteuerung 30, dass mit sehr großer Wahrscheinlichkeit beide Werte in Ordnung sind und stattdessen die Messwerte des Drucksensors 32 auf einem Ausfall des Drucksensors beruhen.

Die Gerätesteuerung 30 kann daher bei dieser Ausführungsform der Erfindung mit den Werten des ersten Temperatursensors 34 allein bei weiterer Beobachtung auch der Werte des zweiten Temperatursensors 14 im Boden des Tiegels 16 den Druckgarprozess erfolgreich beenden.

Zusätzlich wird dem Nutzer bzw. Koch bereits zum Zeitpunkt $t_1$ durch ein Signal oder eine Form mitgeteilt, dass jedenfalls ein Fehler aufgetreten ist. Der Koch kann trotz dieser Fehlermeldung die von ihm schon vorbereitete und weitgehend behandelte Speise fertigzubereiten, also das Gargut fertiggaren, er ist jedoch durch die Fehlermeldung sensibilisiert bzw. gewarnt. Er kann daher nach der Beendigung des Druckgarvorganges die Speise besonders sorgfältig daraufhin überprüfen, ob sie seinen Vorstellungen entspricht. Ist dies der Fall, ist damit nicht nur die Speise verwertbar, sondern dies ist auch ein zusätzliches Indiz dafür, dass die Gerätesteuerung 30 richtig erkannt hat, dass nur und ausschließlich der Drucksensor 32 ausgefallen ist.

Dieser somit eingegrenzte Fehler kann jetzt gezielt angegangen und behoben werden. Mögliche Ursachen für einen Ausfall des Drucksensors 32 sind in dem beschriebenen Beispielfall etwa eine Verstopfung in der Entlüftungs- und Druckabbauleitung 35 oder auch ein defekter Drucksensor 32.

Die Gerätesteuerung 30 kann auch einen Hinweis etwa des Wortlauts "bitte die Druckabbauleitung prüfen und spülen" ausgeben. Nach einem solchen Spülvorgang kann dann ein Selbsttest des Gargeräts 10 gefahren und nur bei weiterhin auftretenden Fehlern des Drucksensors 32 eine Serviceanforderung ausgelöst werden.

Auch andere Fehlereingrenzungen sind durch die nun zur Verfügung stehende und mehrfach nutzbare vergrößere Zahl der Sensoren 14, 32, 33 und 34 denkbar.

**Bezugszeichenliste**

| | |
|---|---|
| 10 | Gargerät |
| 14 | Tiegelbodentemperatursensor |
| 15 | Heizung |
| 16 | Tiegel |
| 18 | Deckel |
| 26 | Druckarm |
| 30 | Gerätesteuerung |
| 31 | Kommunikationsverbindungen |
| 32 | Drucksensor |
| 33 | Kerntemperaturfühler |
| 34 | Temperatursensor für den Garraum |
| 35 | Entlüftungsleitung / Druckabbauleitung |
| 36 | Entlüftungseinrichtung / Druckabbaueinrichtung |

**Patentansprüche**

1. Gargerät (10) zum Garen eines Garguts in Form einer flüssigen oder einer einen hohen Flüssigkeitsanteil enthaltenden Speise, welches aufweist:

einen mit einem Deckel (18) versehenen Tiegel (16), in dem ein Druckraum (26) ausgebildet ist, einen Drucksensor (32), der zum Messen des Drucks im Druckraum (26) dient, einen ersten Temperatursensor (34), der zum Messen der Temperatur im Druckraum (26) dient, und eine Gerätesteuerung (30), die in der Lage ist, die Temperaturmesswerte des ersten Temperatursensors (34) und die Druckmesswerte des Drucksensors (32) zu empfangen, wobei die Gerätesteuerung (30) eine in ihr hinterlegte Umrechnungsformel besitzt, mit der die mittels des ersten Temperatursensors (34) gemessenen Temperaturwerte in Druckwerte im Druckraum (26) und/oder die gemessenen Druckwerte des Drucksensors (32) in Temperaturwerte im Druckraum (26) und/oder die gemessenen Temperaturwerte und die gemessenen Druckwerte in miteinander vergleichbare Werte umrechenbar sind, wobei die Gerätesteuerung (30) in der Lage ist, eine Vergleichsoperation für die mit Hilfe der Umrechnungsformel aus den Temperaturmesswerten des ersten Temperatursensors (34) oder den Druckmesswerten des Drucksensors (32) ermittelten vergleichbaren Werte auszuführen, mit der die Werte verglichen werden, und wobei die Gerätesteuerung (30) aus dem Ergebnis der Vergleichsoperation eine Plausibilitätsbetrachtung ableitet,

**dadurch gekennzeichnet,**
**dass** eine Heizung (15) vorgesehen ist, die zum Erhitzen des Garguts im Druckraum (26) dient, **dass** die Gerätesteuerung (30) in der Lage ist, die Heizung (15) für den Tiegel (16) und den Druckraum (26) anzusteuern, und **dass** die Gerätesteuerung (30) bei einer Abweichung der von der Vergleichsoperation betrachteten Werte um mehr als einen vorgegebenen ersten Toleranzbetrag einen Abbruch des laufenden Garvorgangs vornimmt.

2. Gargerät (10) nach Anspruch 1, **dadurch gekennzeichnet, dass** die Gerätesteuerung (30) zu Beginn des Garvorganges in dem Druckraum (26) eine Entlüftungseinrichtung (36) betreibt, bis die Abweichung der von der Vergleichsoperation verglichenen Werte innerhalb eines vorgegebenen zweiten Toleranzbereichs liegt.

3. Gargerät (10) nach einem der vorgenannten Ansprüche, **dadurch gekennzeichnet, dass** die Gerätesteuerung (30) bei einer Abweichung der von der Vergleichsoperation betrachteten Werte um mehr als einen vorgegebenen dritten Toleranzbetrag einen Hinweis ausgibt.

4. Gargerät (10) nach einem der vorgenannten Ansprüche, **dadurch gekennzeichnet, dass** der erste Temperatursensor (34) im Deckel (18), in der Wandung des Tiegels (16) und/oder im Griffbereich eines Kerntemperaturfühlers (33) angeordnet ist.

5. Gargerät (10) nach einem der vorgenannten Ansprüche, **dadurch gekennzeichnet, dass** ein zweiter Temperatursensor (14) im Bodenbereich des Tiegels (16) bzw. benachbart zur Heizung (15) des Tiegels (16) vorgesehen ist, der Temperaturwerte im Bereich des Bodens des Tiegels (16) erfasst und der Gerätesteuerung (30) zuführt, und dass die Gerätesteuerung (30) die Messwerte des zweiten Temperatursensors (14) im Bereich der Heizung (15) zusätzlich zu den Messwerten des ersten Temperatursensors (34) und des Drucksensors (32) berücksichtigt.

6. Gargerät (10) nach einem der vorgenannten Ansprüche, **dadurch gekennzeichnet, dass** eine Druckabbauleitung (35) vorgesehen ist, die als Entlüftungsleitung ausgebildet ist und/oder dass eine Druckabbaueinrichtung (36) vorgesehen ist, die als Entlüftungseinrichtung ausgebildet ist.

7. Verfahren zum Betreiben eines Gargeräts (10), das einen mit einem Deckel (18) verschließbaren Tiegel (16) sowie eine Heizung (15), aufweist, die zum Erhitzen eines Garguts in Form einer flüssigen oder einer einen hohen Flüssigkeitsanteil enthaltenden Speise in einem Druckraum (26) in dem Gargerät (10) dient, mit den folgenden Schritten:

Messen des Drucks und der Temperatur im Druckraum (26) kontinuierlich oder in Intervallen und Zuführen der gemessenen Temperaturmesswerte und Druckmesswerte einer Gerätesteuerung (30),

Umrechnen der gemessenen Temperaturmesswerte und/oder Druckmesswerte anhand einer in der Gerätesteuerung hinterlegten Umrechnungsformel in miteinander vergleichbare Werte,

Vergleichen der vergleichbaren Werte miteinander, und

Durchführen einer Plausibilitätsprüfung nach dem Vergleich der Werte miteinander, **dadurch gekennzeichnet,**

**dass** bei einer Abweichung der von der Gerätesteuerung (30) verglichenen Werte um mehr als einen vorgegebenen Toleranzbetrag ein Abbruch des laufenden Garvorgangs erfolgt.

8. Verfahren nach Anspruch 7, **dadurch gekennzeichnet, dass** zu Beginn des Garvorganges in dem Druckraum (26) eine Entlüftungseinrichtung (36) betrieben wird, bis die Abweichung der von der Gerätesteuerung (30) verglichenen Werte innerhalb eines vorgegebenen Toleranzbereichs liegt.

9. Verfahren nach Anspruch 7 oder 8, **dadurch gekennzeichnet, dass** die Temperatur im Bereich der Heizung (15) kontinuierlich oder in Intervallen gemessen wird, und die im Bereich der Heizung (15) gemessenen Temperaturmesswerte der Gerätesteuerung (30) zugeführt werden und in mit den Druckmesswerten im Druckraum (26) vergleichbare Werte umgerechnet werden, wonach die vergleichbaren Werte miteinander verglichen werden, und nach dem Vergleich der Messwerte miteinander eine Plausibilitätsprüfung erfolgt.

**Claims**

1. Cooking appliance (10) for cooking a food that is liquid or contains a high proportion of liquid, which has:

a pan (16) with a lid (18), in which a pressure chamber (26) is formed,

a pressure sensor (32), which is used to measure the pressure in the pressure chamber (26),

a first temperature sensor (34), which is used to measure the temperature in the pressure chamber (26), and

an appliance control unit (30), which is able to receive the temperature measurements of the first temperature sensor (34) and pressure measurements of the pressure sensor (32),

wherein the appliance control unit (30) holds a stored conversion formula, with which temperature values measured by the first temperature sensor (34) can be converted into pressure values in the pressure chamber (26) and/or measured pressure values of the pressure sensor (32) into temperature values in the pressure chamber (26) and/or measured temperature values and the measured pressure values into comparable values,

wherein the appliance control unit (30) is able to carry out a comparison operation for the comparable values determined with the aid of the conversion formula from the temperature measurements of the first temperature sensor (34) or the pressure measurements of the pressure sensor (32), with which the values are compared, and

wherein the appliance control unit (30) derives a plausibility check from the result of the comparison operation.

**characterised in**

**that** a heater (15) is provided for heating the food in the pressure chamber (26),

**that** the appliance control unit (30) is able to control the heater (15) for the pan (16) and the pressure chamber (26), and

**that** the appliance control unit (30) undertakes a termination of the current cooking process when there is a deviation of the values considered by the comparison operation by more than a predetermined first tolerance amount.

2. Cooking appliance (10) according to claim 1, **characterised in that** the appliance control unit (30) operates a venting device (36) in the pressure chamber (26) at the start of the cooking process until the deviation from the values compared by the comparison operation is within a predetermined second tolerance range.

3. Cooking appliance (10) according to any one of the preceding claims, **characterised in that** the appliance control unit (30) issues a notification when there is a deviation of the values considered by the comparison operation by more than a predetermined third tolerance amount.

4. Cooking appliance (10) according to any one of the preceding claims, **characterised in that** the first temperature sensor (34) is disposed in the lid (18), in the wall of the pan (16) and/or within reach of a core temperature sensor (33).

5. Cooking appliance (10) according to any one of the preceding claims, **characterised in that** a second temperature sensor (14) is provided in the base area of the pan (16) and adjacent to the heater (15) of the pan (16), which registers temperature values in the area of the base of the pan (16) and supplies them to the appliance control unit (30), and that the appliance control unit (30) takes account of the measurements of the second temperature sensor (14) in the area of the heater (15) in addition to the measurements of the first temperature sensor (34) and of the pressure sensor (32).

6. Cooking appliance (10) according to any one of the preceding claims, **characterised in that** a pressure reduction line (35) is provided, which is configured as a venting line, and/or that a pressure reduction device (36) is provided, which is configured as a venting device.

7. Method of operating a cooking appliance (10) that has a pan (16) closable by a lid (18) and a heater (15) provided for heating a food that is liquid or contains a high proportion of liquid in a pressure chamber (26) of the cooking appliance, with the following steps:

   measurement of the pressure and temperature in the pressure chamber (26) continuously or at intervals and supply of the measured temperature measurements and pressure measurements to an appliance control unit (30), conversion of the measured temperature measurements and/or pressure measurements with the aid of a conversion formula stored in the appliance control unit into values comparable with one another, comparison of the comparable values with one another, and performance of a plausibility check after comparison of the values with one another, wherein the current cooking process is terminated when there is a deviation of the values compared by the appliance control unit (30) by more than a predetermined tolerance amount.

8. Method according to claim 7, **characterised in that** a venting device (36) is operated in the pressure chamber (26) at the start of the cooking process until the deviation of the values compared by the appliance control unit (30) is within a predetermined tolerance range.

9. Method according to claim 7 or 8, **characterised in that** the temperature in the area of the heater (15) is measured continuously or at intervals, and the temperature measurements measured in the area of the heater (15) are supplied to the appliance control unit (30) and are converted into values comparable with the pressure measurements in the pressure chamber (26), following which the comparable values are compared with one another and, after the comparison the measurements with one another, a plausibility check is made.

## Revendications

1. Appareil de cuisson (10) pour cuire un produit à cuire sous la forme d'un plat liquide ou contenant une proportion élevée de liquide, lequel présente :

   un creuset (16) pourvu d'un couvercle (18), dans lequel est réalisé un espace de pression (26),
   un capteur de pression (32), qui sert à mesurer la pression dans l'espace de pression (26),
   un premier capteur de température (34), qui sert à mesurer la température dans l'espace de pression (26), et
   une commande d'appareil (30), qui est en mesure de recevoir les valeurs de mesure de température du premier capteur de température (34) et les valeurs de mesure de pression du capteur de pression (32),
   dans lequel la commande d'appareil (30) possède une formule de conversion qu'elle a enregistrée, à l'aide de laquelle les valeurs de température mesurées au moyen du premier capteur de température (34) peuvent être converties par un calcul en des valeurs de pression dans l'espace de pression (26) et/ou les valeurs de pression mesurées du capteur de pression (32) peuvent être converties par calcul en des valeurs de température dans l'espace de pression (26) et/ou les valeurs de température mesurées et les valeurs de pression mesurées peuvent être converties par calcul en des valeurs comparables les unes aux autres,
   dans lequel la commande d'appareil (30) est en mesure de réaliser une opération de comparaison pour les valeurs comparables déterminées à l'aide de la formule de conversion à partir des valeurs de mesure de température du premier capteur de température (34) ou des valeurs de mesure de pression du capteur de pression (32), les valeurs étant comparées à l'aide de l'opération de comparaison, et
   dans lequel la commande d'appareil (30) déduit du résultat de l'opération de comparaison une évaluation de plausibilité,
   **caractérisé en ce**
   **qu'**est prévu un système de chauffage (15), qui sert à chauffer le produit à cuire dans l'espace de pression (26),
   **que** la commande d'appareil (30) est en mesure de piloter le système de chauffage (15) pour le creuset (16) et l'espace de pression (26), et
   **que** la commande d'appareil (30) effectue, en présence d'un écart des valeurs prises en compte par l'opération de comparaison de plus d'une première valeur de tolérance prédéfinie, une interruption du processus de cuisson en cours.

2. Appareil de cuisson (10) selon la revendication 1, **caractérisé en ce que** la commande d'appareil (30) fait fonctionner un dispositif d'aération (36) au début du processus de cuisson dans l'espace de pression (26), jusqu'à ce que l'écart des valeurs comparées par l'opération de comparaison se situe dans une deuxième plage de tolérance prédéfinie.

3. Appareil de cuisson (10) selon l'une des revendications précédentes, **caractérisé en ce que** la commande d'appareil (30) délivre un message d'alerte en présence d'un écart des valeurs prises en compte par l'opération de comparaison de plus d'une troisième valeur de tolérance prédéfinie.

4. Appareil de cuisson (10) selon l'une des revendications précédentes, **caractérisé en ce que** le premier capteur de température (34) est disposé dans le couvercle (18), dans la paroi du creuset (16) et/ou dans la zone de préhension d'une sonde de température à cœur (33) .

5. Appareil de cuisson (10) selon l'une des revendications précédentes, **caractérisé en ce qu'**est prévu, dans la zone de fond du creuset (16) ou de manière adjacente au système de chauffage (15) du creuset (16), un deuxième capteur de température (14) qui détecte des valeurs de température dans la zone du fond du creuset (16) qu'il amène à la commande d'appareil (30), et que la commande d'appareil (30) tient compte des valeurs de mesure du deuxième capteur de température (14) dans la zone du système de chauffage (15) en complément des valeurs de mesure du premier capteur de température (34) et du capteur de pression (32).

6. Appareil de cuisson (10) selon l'une des revendications précédentes, **caractérisé en ce qu'**une conduite d'élimination de pression (35) est prévue, laquelle est réalisée sous la forme d'une conduite d'aération, et/ou **en ce qu'**un dispositif d'élimination de pression (36) est prévu, lequel est réalisé sous la forme d'un dispositif d'aération.

7. Procédé servant à faire fonctionner un appareil de cuisson (10) qui présente un creuset (16) pouvant être fermé avec un couvercle (18) ainsi qu'un système de chauffage (15) qui sert à chauffer un produit à cuire sous la forme d'un plat liquide ou contenant une proportion élevée de liquide dans un espace de pression (26) dans l'appareil de cuisson (10), comprenant les étapes suivantes :

de mesure de la pression et de la température dans l'espace de pression (26) en continu ou à intervalles et d'amenée des valeurs de mesure de température et des valeurs de mesure de pression mesurées à un appareil de commande (30),

de conversion par calcul des valeurs de mesure de température et/ou des valeurs de mesure de pression mesurées à l'aide d'une formule de conversion par calcul enregistrée dans l'appareil de commande en des valeurs comparables les unes aux autres,

de comparaison entre elles des valeurs comparables, et

d'exécution d'une vérification de plausibilité après la comparaison des valeurs entre elles, dans lequel une interruption du processus de cuisson en cours est effectuée en présence d'un écart des valeurs comparées par la commande d'appareil (30) d'une valeur supérieure à une valeur de tolérance prédéfinie.

8. Procédé selon la revendication 7, **caractérisé en ce qu'**un dispositif d'aération (36) fonctionne au début de l'opération de cuisson dans l'espace de pression (26) jusqu'à ce que l'écart des valeurs comparées par la commande d'appareil (30) se situe dans une plage de tolérance prédéfinie.

9. Procédé selon la revendication 7 ou 8, **caractérisé en ce que** la température est mesurée en continu ou à intervalles dans la zone du système de chauffage (15), et les valeurs de mesure de température mesurées dans la zone du système de chauffage (15) sont amenées à la commande d'appareil (30) et sont converties en des valeurs comparables aux valeurs de mesure de pression dans l'espace de pression (26), après quoi les valeurs comparables sont comparées entre elles, et une vérification de plausibilité est effectuée après la comparaison des valeurs de mesure entre elles.

**Fig. 1**

| Temperatur [°C] | Dampfdruck [bar] |
|---|---|
| 100 | 1,01 |
| 101 | 1,05 |
| 102 | 1,09 |
| 103 | 1,13 |
| 104 | 1,17 |
| 105 | 1,21 |
| 106 | 1,25 |
| 107 | 1,29 |
| 108 | 1,34 |
| 109 | 1,39 |
| 110 | 1,43 |
| 111 | 1,48 |
| 112 | 1,53 |
| 113 | 1,58 |
| 114 | 1,64 |
| 115 | 1,69 |
| 116 | 1,75 |
| 117 | 1,80 |
| 118 | 1,86 |
| 119 | 1,92 |
| 120 | 1,99 |

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009013240 A1
- EP 1342441 B1
- DE 4337126 C2

- DE 9203663 U1
- FR 2634914